# EUROPEAN PATENT APPLICATION

(11) **EP 3 034 283 A1**
(43) Date of publication of application: **22.06.2016**
(21) Application number: 15199959.6
(22) Date of filing: 14.12.2015
(51) Int. Cl.: B29C 70/20, B29C 70/30

(54) **METHOD OF FORMING A LAMINAR COMPOSITE STRUCTURE**

(30) Priority: 18.12.2014 GB 201422583
(71) Applicant: Airbus Operations Limited, Bristol BS34 7PA (GB)
(72) Inventor: JAISWAL, Vimal, Bristol, BS34 7PA (GB)
(74) Representative: Ribeiro, James Michael

(57) **Abstract**

A method of forming a laminar composite structure. A stack of composite layers (1-9) is assembled on a layup tool (10), each composite layer comprising a fibre-reinforced matrix material. The composite layers include an inner composite layer (1) and an outer composite layer (9). During assembly of the stack, a series of spacers (20) are placed in a selected part of the stack, each spacer comprising a spacer matrix material. Each spacer (20) is sandwiched between a respective adjacent pair of the composite layers (1-9). The selected part of the stack forms a bulge (13), and the outer composite layer has a greater path length at the bulge than the inner composite layer. After assembly of the stack, a bend is formed in the stack with the outer composite layer (9) towards an outside of the bend and the inner composite layer (1) towards an inside of the bend, the bend in the stack coinciding with the bulge (13). During or after formation of the bend in the stack, excess matrix material in liquid form flows out of the bulge (13).

## Description

### FIELD OF THE INVENTION

The invention relates to a method of forming a laminar composite structure.

### BACKGROUND OF THE INVENTION

A conventional method of forming a laminar composite structure is disclosed in US 2013/0266431. The method produces a composite structure with a main body and a flange, and is designed to prevent distortion (wrinkling or buckling) of the ply material on the inside of the corner between the main body and the flange.

Other known methods of forming a laminar composite structure are disclosed in US 2009/0197050 and WO 2014/031047.

### SUMMARY OF THE INVENTION

A first aspect of the invention provides a method of forming a laminar composite structure, the method comprising: assembling a stack of composite layers on a layup tool, each composite layer comprising a fibre-reinforced matrix material, the composite layers including an inner composite layer and an outer composite layer; during assembly of the stack, placing one or more spacers in a selected part of the stack, each spacer comprising a spacer matrix material, wherein each spacer is sandwiched between a respective adjacent pair of the composite layers, the selected part of the stack forms a bulge, and the outer composite layer has a greater path length at the bulge than the inner composite layer; after assembly of the stack, forming a bend in the stack with the outer composite layer towards an outside of the bend and the inner composite layer towards an inside of the bend, the bend in the stack coinciding with the bulge; and during or after formation of the bend in the stack, causing excess matrix material to flow out of the bulge.

The present invention provides an alternative method of inhibiting distortion (wrinkling or buckling) of the composite layers on the inside of the bend. A spacer or series of spacers is placed in the selected part of the stack, causing the selected part of the stack (that is, the part which contains the spacer(s)) to form a bulge, and the outer composite layer has a greater path length at the bulge (when viewed in cross section transverse to the bend and a length of the bulge) than the inner composite layer. This greater path length prior to bending of the stack inhibits distortion of the inner composite layer during the bending operation.

Various optional but preferred features of the present invention are presented in the dependent claims.

The excess matrix material may flow out of the bulge in a direction of the composite layers. Alternatively it may flow into a pad in contact with the bulge on an outside of the bend in the stack, and after the excess matrix material has flowed into the pad, the pad containing the excess matrix material is removed.

Optionally each spacer comprising the same matrix material as the composite layers, or a similar (but chemically different) material with substantially the same curing temperature.

Optionally the spacer matrix material and the fibre-reinforced matrix material are both epoxy resins.

The spacer matrix material and the fibre-reinforced matrix material may be thermosetting materials with substantially the same curing temperature, or thermoplastic materials with substantially the same melting temperature.

Typically the one or more spacers comprise an outer spacer near the outer composite layer and an inner spacer near the inner composite layer, and the outer spacer has a greater volume than the inner spacer. For instance the outer spacer may have a greater width than the inner spacer, and/or a greater thickness than the inner spacer.

Typically the bend is formed in the stack by bending the stack around a convex corner of a die. The bend may be formed by a vacuum bag, a rigid bending tool, or any other suitable means.

The composite structure may comprise a variety of structures, including for example an aircraft wing box.

The inner composite layer may be positioned in the stack closer to the layup tool than the outer composite layer, or vice versa.

Optionally only a single spacer may be placed in the selected part of the stack, but more typically a series of two or more spacers is placed in the selected part of the stack.

### BRIEF DESCRIPTION OF THE DRAWINGS

Embodiments of the invention will now be described with reference to the accompanying drawings, in which:
Figure 1 shows a selected part of a stack of composite layers, viewed in cross-section transverse to a length of a bulge in the stack;
Figure 2 is a schematic cross-sectional view of an inner one of the composite layers;
Figure 3 is a schematic cross-sectional view of an inner one of the spacers before it is installed in the stack;
Figure 4 shows an automatic tape laying head assembling the stack;
Figures 5 and 6 show the stack being bent over a die to form a 15° bend;
Figure 7 shows various bending stages;
Figures 8 and 9 show the bent stack on the final die; and
Figure 10 shows various stages in a method of forming part of an aircraft wing box.

### DETAILED DESCRIPTION OF EMBODIMENT(S)

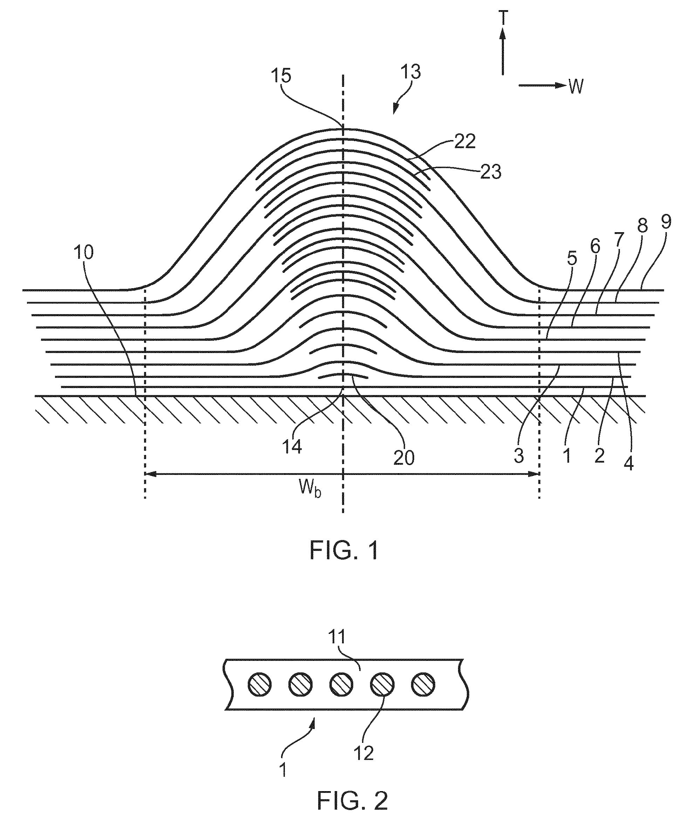

Figure 1 shows a first step in a method of forming a laminar composite structure according to an embodiment of the invention. Composite layers 1-9 are laid one-by-one onto a layup tool 10 to form a stack. The layers include an inner composite layer 1 at the bottom of the stack, an outer composite layer 9 at the top of the stack, and intermediate composite layers 2-8 between the inner and outer composite layers.

Each composite layer 1-9 is made from a fibre-reinforced matrix material. Figure 2 is a schematic cross-sectional view of the inner composite layer 1, the other composite layers 2-9 being identical. The layer 1 comprises a thermosetting epoxy resin matrix material 11 impregnating a sheet of unidirectional carbon fibres 12 (the fibres 12 running in and out of the plane of the cross-section of Figure 2). Such a composite layer is conventionally known as a "prepreg". The direction of the fibres 12 varies from layer to layer so that the stack has desired physical properties.

In this example the inner composite layer 1 is the innermost layer of the stack in contact with the layup tool 10. Optionally the innermost layer of the stack in contact with the layup tool 10 may instead be a non-composite layer (such as a release layer) between the inner composite layer 1 and the tool 10. Similarly the outermost layer of the stack may be a non-composite layer laid on top of the outer composite layer 9 (e.g. a breather layer).

During assembly of the stack, a series of spacers are placed in a selected part of the stack as shown in Figure 1. Each spacer is made from a spacer matrix material which is the same as the fibre-reinforced matrix material 11 in the composite layers. That is, the spacer matrix material is a thermosetting epoxy resin with substantially the same chemical composition, melting temperature and curing temperature as the fibre-reinforced matrix material 11. Also, in this example, each spacer comprises pure spacer matrix material with no reinforcement fibres.

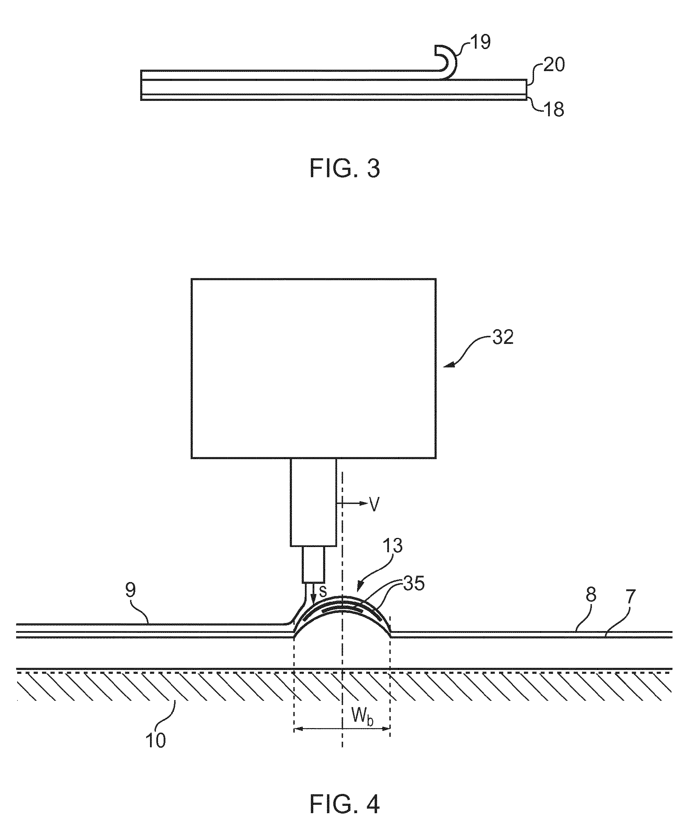

Figure 3 is a sectional view of one of the spacers 20 prior to being placed in the stack, the other spacers being similar. The spacer 20 is installed by peeling off one side of a protective layer 19 on one side of the spacer, manually placing the spacer on the laminate and then peeling off a second protective layer 18 on a second side of the spacer.

One or more spacers is sandwiched between each adjacent pair of the composite layers 1-9, so that the selected part of the stack shown in Figure 1 (that is, the part which contains the spacers) forms a bulge 13 with a flat base 14 and a convex curved apex 15.

Figure 1 is labelled with a thickness direction T and a width direction W. The thickness of the stack (that is, its depth in the thickness direction T) increases at the bulge 13 and decreases on either side of the bulge. The bulge 13 has a width W_{b} and a length (not shown, in and out of the plane of Figure 1) transverse to its width. The length of the bulge 13 is much greater than its width W_{b}.

The composite layers in each adjacent pair come into contact with each other on either side of the spacer(s) sandwiched between them. So for example the first two composite layers 1, 2 are in contact on the left side of Figure 1, then are separated by the spacer 20, then come back into contact on the right side of the spacer 20.

The outer composite layer 9 has a greater path length at the bulge 13 (when viewed in cross section as in Figure 1) than the inner composite layer 1. In this example the path lengths of the composite layers 1-9 increase monotonically from the inner composite layer 1 to the outer composite layer 9.

The minimum radius of curvature of the composite layers at the bulge 13 increases monotonically in the opposite direction. That is, the outer composite layer 9 has a small radius of curvature at the apex 15 of the bulge, and the inner composite layer 1 has a large (possibly infinite) radius of curvature (being flat).

In the example of Figure 1 there are nine composite layers 1-9 and thirteen spacers. The spacers are all similar so only some will be described in detail. Each adjacent pair of composite layers is separated by one or more spacers. The number of spacers placed between each pair of composite layers changes according to the position in the stack. In this example a single spacer is sandwiched between each of the first three pairs of composite layers, whereas a pair of spacers is sandwiched between each of the remaining pairs of composite layers. An inner one of the spacers is labelled 20, and an outer pair of the spacers is labelled 22, 23.

The dimensions of the spacers also change according to their position in the stack. Specifically, the widths of the spacers (in the width direction W of the stack perpendicular to the length and thickness of the bulge) increase from the base to the top of the stack. The spacers have the same length and thickness so their volume also increases accordingly.

In an alternative embodiment (not shown) only a single spacer may be placed between each pair of composite layers, and the thickness of the spacers (in the thickness direction T of the stack) increase from the base to the top of the stack.

In a further alternative embodiment, rather than having one or more spacers between each and every adjacent pair of composite layers in the stack, some adjacent pairs of composite layers may have no spacer between them, for example the two inner most composite layers.

Figure 4 shows an Automated Fibre Placement (AFP) head 32 laying up the stack of composite layers. Only two of the intermediate composite layers 7, 8 are shown, and a pair of spacers 35 is positioned between them. Note that the spacers 35 in Figure 4 have different widths, in contrast with the pair of spacers 22, 23 in Figure 1 which have the same width. The AFP head 32 is shown in the process of laying the outer composite layer 9 directly onto the layer 8 (in this case there is no spacer between the layers 8, 9).

The AFP head 32 moves at a constant velocity V parallel to the flat layup tool 10, and simultaneously feeds the layer 9 at a feed speed S. The feed speed S varies as the AFP head 32 traverses the bulge 13. The feed speed S is the same on either side of the bulge, and increases at the bulge due to the curved path around the bulge 13. Alternatively, the feed speed S can be held constant and the velocity V reduced at the bulge in order to deposit the additional composite material at the bulge.

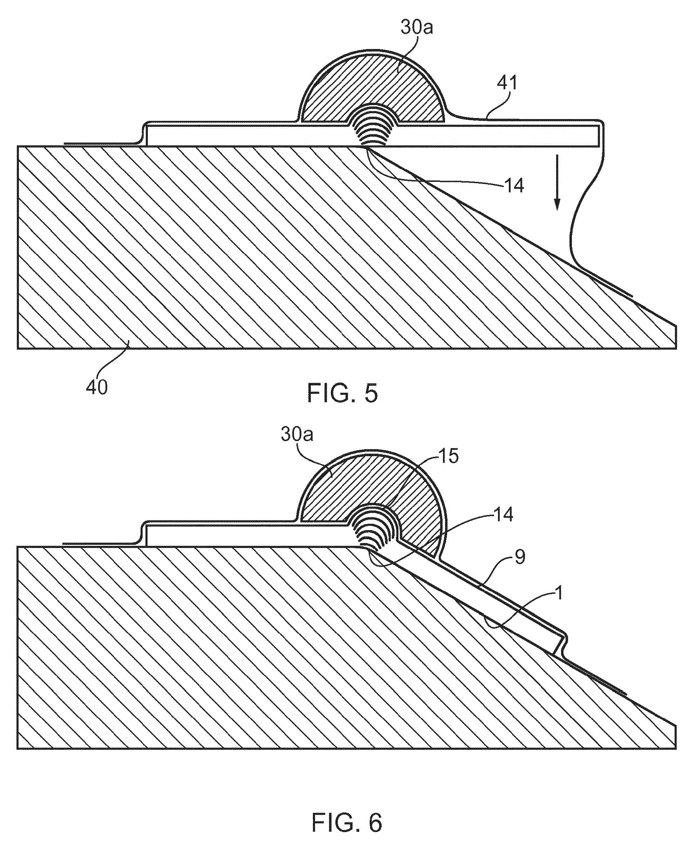

After the stack has been laid up on the tool 10 as shown in Figure 1, a pad 30a is placed in contact with the apex of the bulge as shown in Figure 5. The stack carrying the pad 30a is then transferred to a die 40 as shown in Figure 5, with the base 14 of the bulge directly above a curved convex corner of the die. A vacuum bag 41 is laid onto the assembly and sealed to the die 40 at its edges. Then the volume between the die 40 and the vacuum bag 41 is evacuated, pulling the stack down around the corner of the die to form a bend in the stack as shown in Figure 6.

The outer composite layer 9 (and the apex 15 of the bulge) is towards an outside of the bend, and the inner composite layer 1 (and the base 14 of the bulge) is towards an inside of the bend. The bend in the stack coincides with the bulge due to the careful initial positioning of the base 14 of the bulge directly above the curved convex corner of the die.

During and after formation of the bend in the stack as shown in Figures 5 and 6, excess matrix material is removed from the bulge in a liquid form. The stack is heated to between 70°C to 90°C so that during the bending operation the epoxy resin is in a viscous liquid state and the composite stack is soft and pliable. This causes the resin from the spacers and the composite layers to coalesce, and also a certain amount of excess matrix material flows from the bulge and is absorbed into the pad 30a. This flow of resin into the pad 30a is assisted by the pressure applied by the vacuum bag 41, and by the forces generated by bending the charge over the corner of the die.

The majority of the flow into the pad 30a occurs during the bending operation, but a small amount may also flow into the pad after the bending operation.

Figures 5 and 6 show the pad 30a deforming so that it is in intimate contact with the bulge and on either side of the bulge, both before and after the bending process. Alternatively, the pad 30a may be rigid and pre-formed in the shape shown in Figure 6, so it only intimately contacts the bulge and on either side of the bulge after the bending process.

The excess matrix material removed from the bulge flows through the sheets of fibres 12 in the thickness direction of the stack and into the pad 30a. As mentioned above, the resin from the spacers and the composite layers coalesces within the stack, so the excess matrix material which is absorbed into the pad 30a may originate as fibre-reinforced matrix material in one or more of the composite layers 1-9 and/or as spacer matrix material in one or more of the spacers.

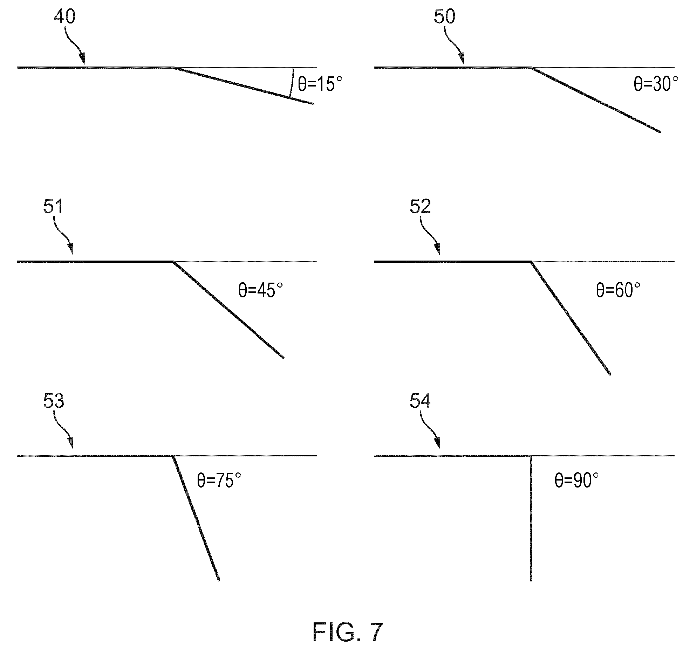

The tool 40 shown in Figures 5 and 6 is designed to form a 15° bend in the stack. Once the bend has been formed, the bag 41 and pad 30a are removed and the bent stack is transferred to a second die 50 (shown in Figure 7) to bend the stack by a further 15° to form a 30° in the stack using a similar process to the process shown in Figures 5 and 6.

This process is then repeated on four further dies 51-54 until the stack has been bent by 90° over the final die 54.

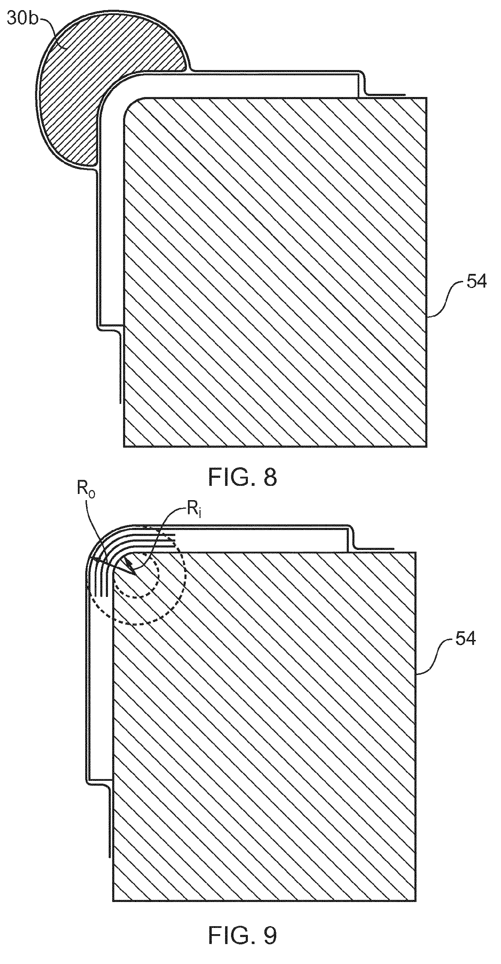

Note that a different pad is used for each stage of formation shown in Figure 7. So for example the first stage uses a pad 30a designed to fit a 15° bend, and the last stage uses a pad 30b (shown in Figure 8) designed to fit a 90° bend.

The pads 30a,b may be formed of any suitable absorbent (and optionally deformable) material: for example a high density honeycombed core of aluminium or aramid, machined to a required shape.

Next the pad 30b containing the excess matrix material is removed, and the bent stack is debulked and then cured on the die 54. Optionally, additional debulking stages can also occur on any of the preceding tools 10, 40, 50-54 shown in Figures 1 and 7.

Note that the pads 30a,b may differ in thickness from the thicknesses shown in Figures 5 and 8, the thickness of the pad being determined by the volume of resin which must be absorbed at each forming stage.

Removing the excess resin from the bulge during the various forming stages shown in Figures 5 to 7 causes a thickness of the stack to reduce at the bulge until the bulge has been completely removed. So when the stack is in its final cured shape the thickness of the stack does not vary around the 90° bend and the bend is substantially wrinkle free, as shown in Figure 9.

As noted above, at the layup stage of Figure 1 the minimum radius of curvature of the outer composite layer 9 at the bulge is smaller than the minimum radius of curvature of the inner composite layer 1. At the end of the forming operation the reverse is true at the 90° bend in the stack: that is, as shown in Figure 9 the minimum radius of curvature Rᵢ of the inner composite layer 1 at the bend is smaller than the minimum radius of curvature Rₒ of the outer composite layer 9 at the bend. By way of example, for a stack thickness of 20mm the inner radius Rᵢ may be 20mm and the outer radius Rₒ may be 40mm (the difference Rₒ-Rᵢ being equal to the stack thickness).

The greater path length of the outer composite layers prior to bending of the stack inhibits distortion of the inner composite layers during the bending operation. Also, the resin spacers provide resin-rich regions between the composite layers which may help in any small shearing between the composite layers if required.

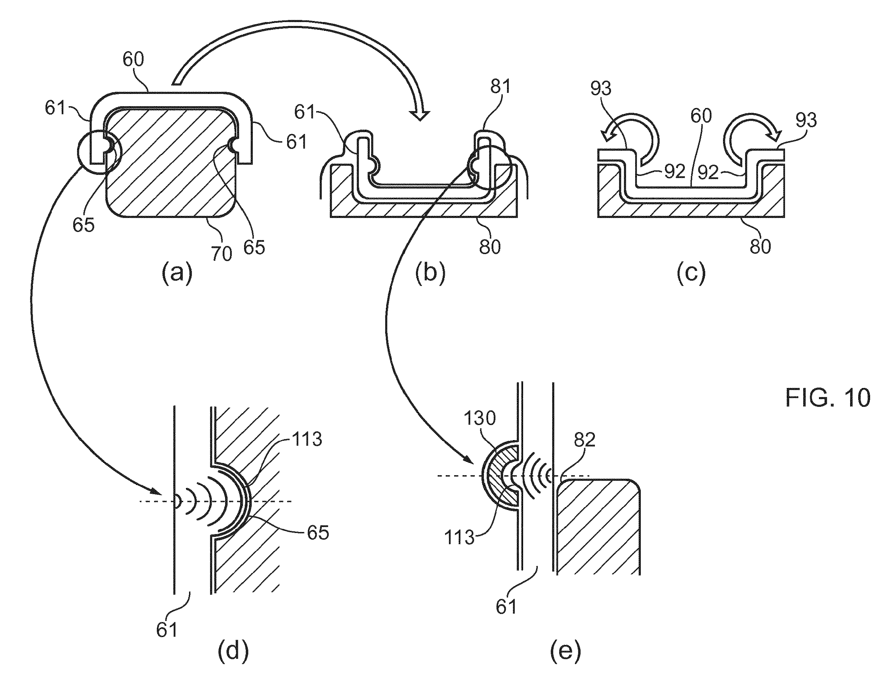

Figure 10 shows how the method of the present invention can be employed in the formation of an aircraft wing box. In a first step, a U-shaped stack is laid onto a male layup tool 70 as shown in Figure 10(a) with an ATL head. The U-shaped stack has a horizontal web 60 and a pair of vertical flanges 61. Figure 10(d) is an enlarged view of one of the flanges 61 (the other flange being a mirror image). The side face of the tool 70 has a recess 65, and the stack is laid up with spacers so that a bulge 113 forms in the recess. The first composite layer in the stack forms the apex of the bulge 113, with spacers placed as required in between the layers and the layers becoming increasingly flat as they are laid up.

Next the U-shaped stack is transferred from the male layup tool 70 to a female die 80 shown in Figure 10(b). As shown in Figure 10(e), each bulge 113 is positioned next to a convex corner 82 of the die 80. Pads 130 are also added to the bulges 113 and a vacuum bag 81 placed over the assembly. The space between the vacuum bag 81 and the assembly is then evacuated to pull down the edges of the flanges 61 and form a pair of spar caps 93 shown in Figure 10(c). Excess resin is removed from the bulges 113 and into the pads 130.

The final structure shown in Figure 10(c) forms a major part of an aircraft wing box. The web 60 forms the lower part of the wing skin, and the bent flanges provide fore and aft spar webs 92 with respective spar caps 93. The aircraft wing box is completed by attaching an upper wing skin (not shown) to the spar caps 93.

In an alternative embodiment, if the spar caps 93 are sufficiently short then the pads 130 can be omitted. In this case the excess resin material flows horizontally from the bulges 113 and out of the edges of the spar caps 93, rather than flowing in a thickness direction through the fibre sheets and into the pads 130.

Although the invention has been described above with reference to one or more preferred embodiments, it will be appreciated that various changes or modifications may be made without departing from the scope of the invention as defined in the appended claims.

## Claims

1. A method of forming a laminar composite structure, the method comprising:
assembling a stack of composite layers on a layup tool, each composite layer comprising a fibre-reinforced matrix material, the composite layers including an inner composite layer and an outer composite layer;
during assembly of the stack, placing one or more spacers in a selected part of the stack, each spacer comprising a spacer matrix material, wherein each spacer is sandwiched between a respective adjacent pair of the composite layers, the selected part of the stack forms a bulge, and the outer composite layer has a greater path length at the bulge than the inner composite layer;
after assembly of the stack, forming a bend in the stack with the outer composite layer towards an outside of the bend and the inner composite layer towards an inside of the bend, the bend in the stack coinciding with the bulge; and
during or after formation of the bend in the stack, causing excess matrix material to flow out of the bulge.

2. The method of claim 1 wherein once the excess matrix material has flowed out of the bulge the outer composite layer has a greater radius of curvature than the inner composite layer at the bend in the stack.

3. The method of claim 1 or 2 wherein the excess matrix material flows out of the bulge into a pad in contact with the bulge on an outside of the bend in the stack, and after the excess matrix material has flowed into the pad, the pad containing the excess matrix material is removed.

4. The method of any preceding claim wherein a thickness of the stack increases at the bulge and decreases on either side of the bulge.

5. The method of any preceding claim wherein the composite layers in each adjacent pair of composite layers come into contact with each other on either side of the spacer(s) sandwiched between them.

6. The method of any preceding claim wherein the excess matrix material flowing out of the bulge causes a thickness of the stack to reduce at the bulge.

7. The method of any preceding claim wherein the excess matrix material originates as fibre-reinforced matrix material in one or more of the composite layers and/or as spacer matrix material in one or more of the spacers.

8. The method of any preceding claim wherein each spacer comprises pure spacer matrix material with no reinforcement fibres.

9. The method of any preceding claim wherein the spacer matrix material has substantially the same chemical composition as the fibre-reinforced matrix material.

10. The method of any preceding claim wherein the spacer matrix material and the fibre-reinforced matrix material are thermosetting materials with substantially the same curing temperature.

11. The method of any preceding claim wherein the one spacers comprise an outer spacer near the outer composite layer and an inner spacer near the inner composite layer, and the outer spacer has a greater volume than the inner spacer.

12. The method of any preceding claim, wherein the stack comprises three or more composite layers and two or more spacers, and each one of the two or more spacers is sandwiched between a respective adjacent pair of the three or more composite layers.

13. The method of any preceding claim, wherein the stack comprises four or more composite layers and three or more spacers, and each one of the three or more spacers is sandwiched between a respective adjacent pair of the four or more composite layers.

14. The method of any preceding claim wherein the bend is formed in the stack by bending the stack around a convex corner of a die.

15. The method of any preceding claim wherein the excess matrix material flows out of the bulge during the formation of the bend in the stack.
